# EUROPEAN PATENT APPLICATION

(11) **EP 4 733 832 A1**
(43) Date of publication of application: **29.04.2026**
(21) Application number: 24825579.6
(22) Date of filing: 02.05.2024
(51) Int. Cl.: G02C 7/06

(54) **SPECTACLES AND SPECTACLE LENS**

(30) Priority: 22.06.2023 JP 2023102374
(71) Applicant: HOYA LENS THAILAND LTD., Pathumthani 12130 (TH)
(72) Inventor: MATSUOKA, Shohei, Tokyo 160-8347 (JP)
(74) Representative: Betten & Resch
(86) International application number: PCT/JP2024/016915
(87) International publication number: WO 2024/262170

(57) **Abstract**

Spectacles having a spectacle lens achieving a myopia progression inhibition effect or a hyperopia reducing effect, the spectacle lens comprising: a central clear region that realizes a prescription power of a wearer and includes an eye point of the spectacle lens; an annular functional region that includes a portion with a power different from the prescription power and surrounds the central clear region; and an annular peripheral clear region that realizes the prescription power and surrounds the functional region, and a width of the peripheral clear region in a top-bottom direction on a straight line in the top-bottom direction passing through the eye point is smaller than an equivalent circle diameter of the central clear region.

## Description

### Technical Field

The present invention relates to spectacles and a spectacle lens.

### Background Art

As an aspect of a spectacle lens with a myopia progression inhibition effect or a hyperopia reducing effect, PTL 1, for example, describes a spectacle lens provided with a clear region and a functional region.

### Citation List

### Patent Literature

[PTL 1] Japanese Patent No. 7177959

### Summary of Invention

### Technical Problem

An object of an embodiment of the present invention is to provide a technique of making it easier to obtain a myopia progression inhibition effect or a hyperopia reducing effect by inhibiting the formation of a habit of glancing upward or downward while ensuring peripheral vision in spectacles having a spectacle lens achieving a myopia progression inhibition effect or a hyperopia reducing effect.

### Solution to Problem

A first aspect of the present invention is spectacles, comprising:
a spectacle lens achieving a myopia progression inhibition effect or a hyperopia reducing effect,
wherein the spectacle lens includes:
   a central clear region that realizes a prescription power of a wearer and includes an eye point of the spectacle lens;
   an annular functional region that includes a portion with a power different from the prescription power and surrounds the central clear region; and
   an annular peripheral clear region that realizes the prescription power and surrounds the functional region, and
   a width of the peripheral clear region in a top-bottom direction on a straight line in the top-bottom direction passing through the eye point is smaller than an equivalent circle diameter of the central clear region.

A second aspect of the present invention is the spectacles according to the first aspect, wherein
a width of the peripheral clear region in a horizontal direction on a straight line in the horizontal direction passing through the eye point is larger than the equivalent circle diameter of the central clear region.

A third aspect of the present invention is the spectacles according to the first aspect, wherein
the width of the peripheral clear region in the top-bottom direction is equal to or greater than 2.5 mm and equal to or less than 5.0 mm.

A fourth aspect of the present invention is the spectacles according to the first aspect, wherein
the central clear region is of a size that fits within a circle having a diameter equal to or greater than 4 mm and equal to or less than 13 mm with the eye point as a center thereof.

A fifth aspect of the present invention is the spectacles according to the first aspect, wherein
an area of the central clear region is equal to or greater than 4% and equal to or less than 16% with respect to a sum of areas of the central clear region and the function region.

A sixth aspect of the present invention is the spectacles according to any one of the first to fifth aspects, further comprising:
a frame having a top-bottom width equal to or greater than 27 mm and equal to or less than 38 mm and a horizontal width equal to or greater than 42 mm and equal to or less than 50 mm.

A seventh aspect of the present invention is
a spectacle lens achieving a myopia progression inhibition effect or a hyperopia reducing effect, the spectacle lens comprising:
a central clear region that realizes a prescription power of a wearer and includes an eye point of the spectacle lens;
an annular functional region that includes a portion with a power different from the prescription power and surrounds the central clear region; and
an annular peripheral clear region that realizes the prescription power and surrounds the functional region, and
when being cut to fit a frame having a top-bottom width equal to or greater than 27 mm and equal to or less than 38 mm, a width of the peripheral clear region in a top-bottom direction on a straight line in the top-bottom direction passing through the eye point is smaller than an equivalent circle diameter of the central clear region.

### Advantageous Effects of Invention

According to an embodiment of the present invention, it is possible to easily achieve a myopia progression inhibition effect or a hyperopia reducing effect by inhibiting the formation of a habit of glancing upward or downward while ensuring peripheral vision in spectacles having a spectacle lens achieving a myopia progression inhibition effect or a hyperopia reducing effect.

### Brief Description of Drawings

[Fig. 1] Fig. 1 is a schematic plan view of an object-side surface of a spectacle lens for the left eye according to a first embodiment of the present invention.
[Fig. 2] Fig. 2 is a schematic plan view showing an example of a spectacle lens achieving a myopia progression inhibition effect according to a reference example.

### Description of Embodiments

### <Findings obtained by inventors>

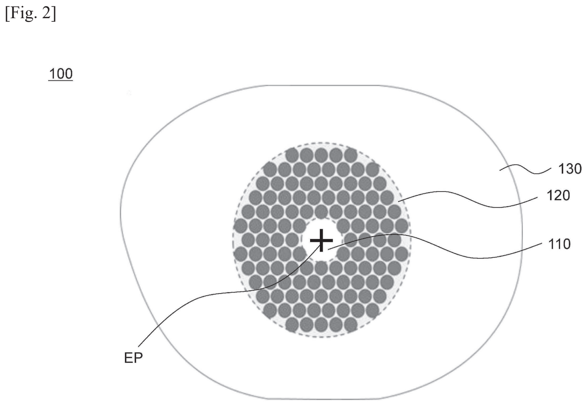

Findings obtained by the inventors are described first. Fig. 2 is a schematic plan view showing an example of a spectacle lens achieving a myopia progression inhibition effect according to a reference example. As shown in Fig. 2, a spectacle lens 100 according to the reference example includes a central clear region 110, a functional region 120, and a peripheral clear region 130. The central clear region 110 and the peripheral clear region 130 are high-visibility regions for realizing the prescription power of the wearer. On the other hand, the functional region 120 is formed with a plurality of convex regions and has poor visibility compared with the central clear region 110 and the peripheral clear region 130. With this configuration, the spectacle lens 100 can achieve a myopia progression inhibition effect. The details of each region will be described hereinbelow.

As described in PTL 1, from the perspective of efficiently achieving the myopia progression inhibition effect, the functional region 120 is preferably arranged close to an eye point (EP). However, as a result of arranging the functional region 120 close to the eye point, the central clear region 110 becomes narrow and the peripheral clear region 130 becomes wide, often causing the wearer to move the spectacles up and down to glance an object upward and downward (i.e., glance an object by using the peripheral clear region 130). This problem is particularly pronounced when the wearers are children, as in many cases spectacle lenses for achieving the myopia progression inhibition effect are designed especially for children (e.g., elementary school children). If such a state becomes habitual, it may become difficult to accomplish the myopia progression inhibition effect, possibly causing cross-eye and poor posture.

The inventors have diligently examined the above-mentioned problems. As a result, the inventors have discovered that the reason to move the spectacles up and down to glance an object using the peripheral clear region can be reduced by setting the width of the peripheral clear region in the top-bottom direction on a straight line in the top-bottom direction passing through the eye point to a value smaller than an equivalent circle diameter of the central clear region, thereby inhibiting the formation of a habit of glancing upward or downward, so that the myopia progression inhibition effect or hyperopia reducing effect (also referred to as "myopia progression inhibition effect or the like," hereinafter) can be obtained easily. The inventors have also discovered that by providing the peripheral clear region to surround the functional region, a minimum level of peripheral vision can be secured, thereby enhancing the safety.

### [Details of embodiments of the present invention]

Next, an embodiment of the present invention will be described with reference to the following drawings. The present invention is not limited to these examples and is shown by the scope of claims, and is intended to encompass equivalents to and all modifications within the scope of the claims.

The spectacle lens described in the present specification has an object-side surface and an eyeball-side surface. The "object-side surface" is the surface that is located on the object side when the spectacles provided with the spectacle lens is worn by the wearer, and the "eyeball-side surface" is the surface located on the opposite side, that is, the eyeball side when the spectacles provided with the spectacle lens are worn by the wearer. This relationship also applies to a lens substrate that forms the basis of the spectacle lens. In other words, the lens substrate also has the object-side surface and the eyeball-side surface.

As used herein, the eye point (EP) is a position through which the line of sight passes, for example, when the wearer with the spectacles on look directly in front; examples will be given below. The eye point may be a position through which the line of sight (at the time of near vision) passes when the wearer looks at an object close to the wearer, that is, a near viewing eye point. In an aspect of the present invention, the geometrical center of the spectacle lens before fitting the lens into the frame is aligned with the eye point and a prism reference point, and description will be made as to the case where the geometrical center is aligned with a lens center as well. The position of the eye point can be identified by referring to a Remark chart or a Centration chart issued by the lens manufacturer.

### <First embodiment of the present invention> (1) Spectacles and spectacle lens

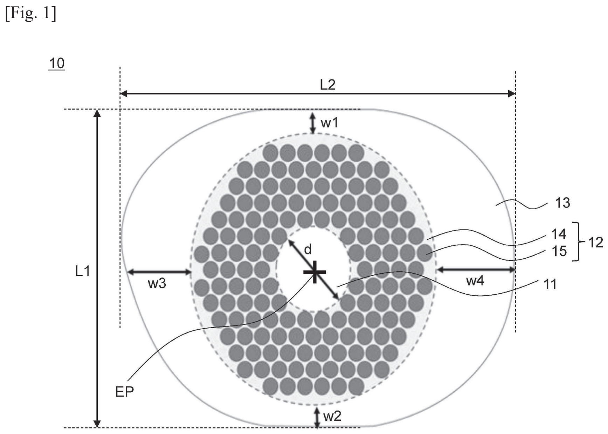

Fig. 1 is a schematic plan view of the object-side surface of a spectacle lens 10 for the left eye according to the present embodiment. The spectacle lens 10 of the present embodiment is a myopia progression inhibition lens that achieve a myopia progression inhibition effect, and includes a central clear region 11, a functional region 12, and a peripheral clear region 13. The spectacle lens 10 of the present embodiment is cut to fit a frame, as shown in Fig. 1.

The central clear region 11 is a region that realizes a prescription power of the wearer and includes an eye point of the spectacle lens 10. In the present embodiment, the central clear region 11 is circular, and the center of the central clear region 11 is aligned with the eye point of the spectacle lens 10. The central clear region 11 is, for example, a transparent portion with a smooth surface shape and is a region that causes a light flux incident from the object-side surface to be emitted from the eyeball-side surface, enter the wearer's pupil, and be focused on the retina.

The central clear region 11 can realize the prescription power (spherical power, astigmatism power, astigmatism axis, or the like). This spherical power may be a power to be corrected for frontal vision (e.g., a distance power) (where the distance to the object is from infinity to approximately 1 m), or may be a power to be corrected for intermediate vision (the distance to the object is approximately 1 m to 40 cm) or near vision (the distance to the object is approximately 40 cm to 10 cm).

The central clear region 11 is not provided with a configuration (e.g., convex or concave region) intended for achieving the effect of suppressing the myopia progression inhibition effect or the like.

The central clear region 11 (and a base region 14 in the functional region 12 to be described hereinafter, and the peripheral clear region 13) of the present embodiment function as a so-called unifocal lens. The surface shape thereof is not particularly limited, but in the present embodiment the central clear region 11 is illustrated as a spherical shape.

The functional region 12 is an annular region that has a portion having a power different from the prescription power of the wearer and surrounds the central clear region 11. In the present embodiment, the functional region 12 is provided with a plurality of convex regions 15 (also referred to as defocus regions) in the form of islands as portions having a power different from the prescription power of the wearer. More specifically, as shown in Fig. 1, the convex regions 15 are discretely arranged independently so that the centers of the respective convex regions 15 are the vertexes of equilateral triangles. In the functional region 12, a portion other than the convex regions 15 is the base region 14 exhibiting the same function as the central clear region 11. The functional region 12 is, for example, a region that causes a light flux incident from the object-side surface to be emitted from the eyeball-side surface, while preventing at least a part of a light flux incident into the pupil of the wearer from being converged onto the retina. Therefore, the spectacle lens 10 of the present embodiment achieves the myopia progression inhibition effect. In the present embodiment, as shown in Fig. 1, with the eye point as the center, the functional region 12 may be positioned between a circle that is in contact with the convex region 15 closest to the eye point and a circle that is in contact with the convex region 15 farthest from the eye point.

The plurality of convex regions 15 only need to be formed on at least one of the object-side surface and the eyeball-side surface of the spectacle lens 10. The present embodiment illustrates an example in which the plurality of convex regions 15 are provided only on the object-side surface of the spectacle lens 10. The surface shape of the convex region 15 is preferably spherical, for example. The number of convex regions 15 within the functional region 12 is not particularly limited, but is equal to or greater than 20 and equal to or less than 500, for example.

The plurality of convex regions 15 are arranged in an island-like manner, for example (i.e., away from each other without being adjacent to each other). It is preferred that the arrangement of the plurality of convex regions 15 exhibit periodicity. Thus, a sense of discomfort such as blurring in a specific direction can be suppressed, and comfort of wearing the spectacle lens 10 can be improved.

The diameter of the convex region 15 in plan view is preferably equal to or greater than 0.6 mm and equal to or less than 2.0 mm, for example. The pitch of the convex regions 15 (the distance between the centers of the adjacent convex regions 15) is preferably equal to or greater than 1.0 mm and equal to or less than 2.0 mm, for example. It is preferred that the difference (defocus power) between the power of the convex region 15 and the power of portions other than the convex region 15 is, for example, equal to or greater than 0.5 D and equal to or less than 10 D.

The convex regions 15 may be arranged in a portion other than the functional region 12, but from the perspective of improving the comfort of wearing the spectacle lens 10, for example, it is preferred that 80% or more (more preferably 90% or more) of all the convex regions 15 provided in the spectacle lens 10 be arranged in the functional region 12.

In the functional region 12, the area ratio of the convex regions 15 is preferably equal to or greater than 30% and equal to or less than 60% (more preferably equal to or greater than 40% and equal to or less than 60%), for example. If the area ratio of the convex regions 15 is less than 30%, the myopia progression inhibition effect or the like may not be sufficiently obtained. On the other hand, by setting the area ratio of the convex regions 15 to 30% or more, the myopia progression inhibition effect or the like can be sufficiently obtained. On the other hand, if the area ratio of the convex regions 15 exceeds 60%, the comfort of wearing the spectacle lens 10 and the appearance thereof may be affected negatively. However, by setting the area ratio of the convex regions 15 to 60% or less, the comfort of wearing the spectacle lens 10 and the appearance thereof can be maintained.

The peripheral clear region 13 is an annular region that realizes the prescription power of the wearer and surrounds the functional region 12. In the present embodiment, the peripheral clear region 13 has the same function as the central clear region 11. Further, since the peripheral clear region 13 is formed along the outer periphery of the spectacle lens 10 so as to surround the functional region 12, the minimum peripheral vision can be secured.

The central clear region 11 and the peripheral clear region 13 are high-visibility regions for realizing the prescription power of the wearer. On the other hand, the functional region 12 is formed with the plurality of convex regions 15 and is a region with poorer visibility as compared with the central clear region 11 and the peripheral clear region 13. Therefore, for example, if the central clear region 11 is narrow and the peripheral clear region 13 is wide, the wearer is likely to move the spectacles up and down to glance an object upward or downward (i.e., glance an object by using the peripheral clear region 13). If such a state becomes habitual, it may become difficult to accomplish the myopia progression inhibition effect, possibly causing cross-eye and poor posture.

On the other hand, in the spectacle lens 10 of the present embodiment, the width of the peripheral clear region 13 in the top-bottom direction on the straight line in the top-bottom direction passing through the eye point is smaller than an equivalent circle diameter d of the central clear region 11. As shown in Fig. 1, the width of the peripheral clear region 13 in the top-bottom direction on the straight line in the top-bottom direction passing through the eye point can be measured at two sections, the top and bottom, of the spectacle lens 10, but both a width w1 in the top direction (upper side in Fig. 1) and a width w2 in the bottom direction (lower side in Fig. 1) are smaller than the equivalent circle diameter d of the central clear region 11. As a result, the reason to move the spectacles up and down to glance an object by using the peripheral clear region 13 can be reduced, and the formation of a habit of looking upward or downward can be suppressed, thereby easily achieving the myopia progression inhibition effect. From the perspective of ensuring the minimum peripheral vision, it is preferred that the width w1 and the width w2 be greater than 0 mm. From the perspective of further reducing the reason to look at an object by using the peripheral clear region 13, it is preferred that the width w1 and the width w2 be smaller than (π / 4)d.

On the other hand, the width of the peripheral clear region 13 in the horizontal direction on a straight line passing through the eye point is preferably larger than the equivalent circle diameter d of the central clear region 11. As shown in Fig. 1, the width of the peripheral clear region 13 in the horizontal direction on a straight line passing through the eye point can be measured at two sections on the right and left sides of the spectacle lens 10, and at least either a width w3 on the nose side (left side in Fig. 1) or a width w4 on the ear side (right side in Fig. 1) is preferably larger than the equivalent circle diameter d of the central clear region 11. Thus, peripheral vision can be sufficiently secured, thereby improving the safety. Because of the structure of the spectacles, it is more difficult to shift the spectacles left and right to look an object than shifting the spectacles up and down, even if the width w3 or w4 is greater than the equivalent circle diameter d of the central clear region 11, the reason to look at an object by using the peripheral clear region 13 is reduced. Furthermore, it is preferred that the width w4 on the ear side be greater than the width w3 on the nose side from the perspective of securing the peripheral vision and from the perspective of reducing the reason to look at an object by using the peripheral clear region 13.

It is also preferred that the width w1 and the width w2 be equal to or greater than 2.5 mm and equal to or less than 5.0 mm, for example. If the width w1 and the width w2 are less than 2.5 mm, peripheral view in the top-bottom direction may become insufficient. However, by setting the width w1 and the width w2 to 2.5 mm or more, sufficient peripheral view in the top-bottom direction can be secured. On the other hand, if the width w1 and the width w2 exceed 5.0 mm, the wearer is likely to look at an object by using the peripheral clear region 13, increasing the possibility that the myopia progression inhibition effect or the like may not be obtained. However, by setting the width w1 and the width w2 to 5.0 mm or less, it becomes difficult to look at an object by using the peripheral clear region 13, so that the myopia progression inhibition effect or the like can be obtained more easily. Note that setting the width w1 and the width w2 to 5.0 mm or less corresponds to, for example, setting the width of a high-visibility region to the pupil diameter of the wearer or less when the wearer glances upward or downward, and setting the width w1 and the width w2 to 2.5 mm or more corresponds to, for example, setting the width of a high-visibility region to half of the pupil diameter of the wearer or more.

Furthermore, it is preferred that the maximum value of the width of the peripheral clear region 13 in the top-bottom direction on a straight line in the top-bottom direction passing through the central clear region 11 be smaller than the equivalent circle diameter d of the central clear region 11. Thus, even when the line of sight moves slightly from the eye point to the left or right, the reason to look at an object by using the peripheral clear region 13 is reduced, and the formation of a habit of glancing upward or downward is suppressed, so that the myopia progression inhibition effect or the like can be obtained more easily. Further, it is more preferable that the maximum value of the width of the peripheral clear region 13 in the top-bottom direction on the straight line in the top-bottom direction passing through the central clear region **11** be, for example, equal to or greater than 2.5 mm and equal to or less than 5.0 mm.

It is preferred that the central clear region **11** be of a size that fits within a circle having a diameter equal to or greater than 4 mm and equal to or less than 13 mm (preferably equal to or greater than 6 mm and equal to or less than **11** mm) with the eye point as a center thereof. As a result, the comfort of wearing the spectacles can be improved, and a sufficient myopia progression inhibition effect or the like can be obtained. When the central clear region **11 is** circular and the center of the central clear region **11** is aligned with the eye point as in the present embodiment, the fact that the central clear region **11** fits within a circle having a diameter equal to or greater than 4 mm and equal to or less than 13 mm with the eye point as its center can also be said that the equivalent circle diameter d of the central clear region 11 is equal to or greater than 4 mm and equal to or less than 13 mm.

Preferably, the area of the central clear region 11 is equal to or greater than 4% and equal to or less than 16% of the sum of the areas of the central clear region 11 and the functional region 12 (corresponding to the fact that the diameter of the central clear region 11 is equal to or greater than 25% and equal to or less than 40% of the outer diameter of the functional region 12), and more preferably equal to or greater than 6.3% and equal to or less than 12.3% (corresponding to the fact that the diameter of the central clear region 11 is equal to or greater than 25% and equal to or less than 35% of the outer diameter of the functional region 12). When the area of the central clear region 11 is smaller than 4% of the sum of the areas of the central clear region 11 and the functional region 12, it becomes difficult to find a clear zone from within the functional region 12, and there is a possibility that a reason to look at an object by using the peripheral clear region 13 is easily induced. Also, if the area of the central clear region 11 is larger than 16% of the sum of the areas of the central clear region 11 and the functional region 12, the functional region 12 becomes relatively insufficient, and there is a possibility that the myopia progression inhibition effect or the like is not easily exerted. On the other hand, when the area of the central clear region 11 is set to be equal to or greater than 4% and equal to or less than 16% (more preferably equal to or greater than 6.3% and equal to or less than 12.3%) with respect to the sum of the areas of the central clear region 11 and the functional region 12, the central clear region 11 can be easily recognized by the wearer, and the myopia progression inhibition effect or the like can easily be obtained as the functional region 12 acts effectively.

By putting the spectacle lens 10 of the present embodiment into a predetermined frame, it is possible to realize spectacles having the spectacle lens 10 that can achieve the myopia progression inhibition effect. In the frame of the spectacles according to the present embodiment, a top-bottom width L1 is equal to or greater than 27 mm and equal to or less than 38 mm, and a horizontal width L2 (also referred to as a lens width) is equal to or greater than 42 mm and equal to or less than 50 mm, for example. Although the above-mentioned frame size assumes a general frame for children, for example, in a frame in which the top-bottom width L1 is 30 mm or less, the wearer is likely to move the spectacles downward to look at an object from the outside of the frame. Therefore, in consideration of the above problem, it is more preferred that the top-bottom width L1 of the frame of the spectacles of the present embodiment be equal to or greater than 31 mm and equal to or less than 38 mm.

As the lens substrate constituting the spectacle lens 10, any of various lens substrates generally used can be used. The lens substrate may be, for example, a plastic lens substrate or a glass lens substrate. The glass lens substrate may be, for example, a lens substrate made of inorganic glass. The plastic lens substrate is preferable as the lens substrate because it is lightweight and less prone to breakage. Examples of the plastic lens substrate include styrene resins such as (meth)acrylic resins, polycarbonate resins, aryl resins, aryl carbonate resins such as diethylene glycol bisaryl carbonate resins (CR-39), vinyl resins, polyester resins, polyether resins, urethane resins obtained by reacting an isocyanate compound with a hydroxyl compound such as diethylene glycol, thiourethane resins obtained by reacting an isocyanate compound with a polythiol compound, and cured products obtained by curing a curable composition containing a (thio)epoxy compound having one or more disulfide bonds in the molecule (generally referred to as transparent resins). The curable composition may also be referred to as a polymerizable composition. As the lens substrate, an undyed substrate (colorless lens) or a dyed substrate (dyed lens) may be used. The thickness of the lens substrate is not particularly limited. However, for example, the thickness (central thickness) may be approximately 1 to 30 mm. The refractive index of the lens substrate may be, for example, approximately 1.60 to 1.75. However, the refractive index of the lens substrate is not limited to this range, and may be within or outside this range. In the present specification, the refractive index refers to the refractive index with respect to light having a wavelength of 500 nm.

### (2) Variations and the like

The embodiment of the present invention has been specifically described above. However, the present invention is not limited to the above-described embodiment, and various modifications can be made without departing from the gist of the present invention.

The foregoing embodiment has described the case where the spectacle lens 10 achieves the myopia progression inhibition effect, but the present invention can also be applied to spectacle lenses having a hyperopia reducing effect and spectacles having the spectacle lenses, by changing the convex regions 15 to concave regions.

Although the foregoing embodiment has explained a case in which the spectacle lens 10 has been cut to fit in the frame, the present invention can also be applied to spectacle lenses that have not been cut. In this case, for example, when cutting the lens to fit in a frame whose top-bottom width is equal to or greater than 27 mm and equal to or less than 38 mm (preferably equal to or greater than 31 mm and equal to or less than 38 mm), the central clear region, the functional region, and the peripheral clear region may be designed in such a manner that the width of the peripheral clear region in the top-bottom direction on a straight line in the top-bottom direction passing through the eye point is smaller than the equivalent circle diameter of the central clear region. In addition, for example, when the lens is cut to fit in a frame whose horizontal width is equal to or greater than 42 mm and equal to or less than 50 mm, the central clear region, the functional region, and the peripheral clear region are preferably designed in such a manner that the width of the peripheral clear region in the horizontal direction on a straight line in the horizontal direction passing through the eye point is larger than the equivalent circle diameter of the central clear region. As for other features, the features similar to those of the above-described embodiment can be applied.

### Examples

Next, examples of the present invention will be described. These examples are merely exemplary of the present invention, and the present invention is not limited to these examples.

In the present embodiment, sample spectacles 1 to 6 were designed as spectacles having a spectacle lens achieving the myopia progression inhibition effect. The present example has used a model in which the box center of the frame, the lens center, and the centers of the respective regions (central clear region, functional region, and peripheral clear region) are located at the same point (corresponding to the eye point). Two types of frames were prepared: a frame for the lower elementary school grades, which has a top-bottom width of 29 mm and a horizontal width of 44 mm (frame A), and a frame for the higher elementary school grades, which has a top-bottom width of 36 mm and a horizontal width of 48 mm (frame B).

The configurations common to the sample spectacle lenses 1 to 6 are as follows.
· Type of lens substrate: PC (polycarbonate)
· Refractive index of lens substrate: 1.589
· Prescription power (spherical power): 0.00 D
· Prescription power (astigmatism power): 0.00 D
· Configuration of functional region: Convex regions are arranged like islands
· Shape of convex region: Spherical
· Power of convex regions: 3.50 D
· Surface on which convex region is formed: Object-side surface
· Arrangement of convex regions: Arranged such that centers of respective convex regions are the vertexes of equilateral triangles
· Shape of convex region in plan view: Circle (diameter 1.00 mm)
· Pitch of convex regions (distance between centers of adjacent convex regions): 1.50 mm

In sample 1, the spectacle lens (lens 1) in which the equivalent circle diameter of the central clear region is 7.8 mm and the outer diameter of the functional region is 26.1 mm is applied to a frame 1.

In sample 2, a spectacle lens (lens 1) similar to that of sample 1 is applied to a frame 2.

In sample 3, a spectacle lens (lens 2) in which equivalent circle diameter of the central clear region is 7.8 mm and the outer diameter of the functional region is 22.5 mm is applied to the frame 1.

In sample 4, a spectacle lens (lens 2) similar to that of sample 2 is applied to the frame 2.

In sample 5, a spectacle lens (lens 3) in which the equivalent circle diameter of the central clear region is 9.4 mm and the outer diameter of the functional region is 26.1 mm is applied to the frame 1.

In sample 6, a spectacle lens (lens 4) in which the equivalent circle diameter of the central clear region is 6.9 mm and the outer diameter of the functional region is 20 mm is applied to the frame 2.

Table 1 shows the results of measuring the top-bottom widths and the horizontal widths of the peripheral clear regions on a straight line in the top-bottom direction (or horizontal direction) passing through the eye point of the sample spectacles 1 to 6.

**[Table 1]**

| | SAMPLE 1 | SAMPLE2 | SAMPLE3 | SAMPLE 4 | SAMPLE 5 | SAMPLE 6 |
|---|---|---|---|---|---|---|
| FRAME | A | B | A | B | A | B |
| FRAME TOP-BOTTOM WIDTH (mm) | 29 | 36 | 29 | 36 | 29 | 36 |
| FRAME HORIZONTAL WIDTH (mm) | 44 | 48 | 44 | 48 | 44 | 48 |
| LENS | 1 | 1 | 2 | 2 | 3 | 4 |
| CENTRAL CLEAR REGION EQUIVALENT CIRCLE DIAMETER (mm) | 7.8 | 7.8 | 7.8 | 7.8 | 9.4 | 6.9 |
| FUNCTIONAL REGION OUTER DIAMETER (mm) | 26.1 | 26.1 | 22.5 | 22.5 | 32.2 | 20 |
| PERIPHERAL CLEAR REGION TOP-BOTTOM WIDTH (mm) | 1.45 | 4.95 | 3.25 | 6.75 | 0 | 8 |
| PERIPHERAL CLEAR REGION HORIZONTAL WIDTH (mm) | 8.95 | 10.95 | 10.75 | 12.75 | 5.9 | 14 |

As shown in Table 1, in the sample spectacles 1 to 4, the top-bottom width of the peripheral clear region was smaller than the equivalent circle diameter of the central clear region. This reduces the reason to look at an object by using the peripheral clear region by moving the spectacles up and down, thereby making it easy to obtain the myopia progression inhibition effect. Since the top-bottom width of the peripheral clear region is 0 mm in the sample spectacles 5, the sample spectacles 1 to 4 are preferred from the perspective of ensuring minimum peripheral vision. Since the top-bottom width of the peripheral clear region is greater than the equivalent circle diameter of the central clear region in the sample spectacles 6, the wearer is likely to look at an object by using the peripheral clear region, and the myopia progression inhibition effect may not be obtained easily.

Further, in the sample spectacles 1 to 4, the horizontal width of the peripheral clear region was greater than the equivalent circle diameter of the central clear region. Thus, peripheral vision can be sufficiently secured, thereby improving the safety. Since the horizontal width of the peripheral clear region is smaller than the equivalent circle diameter of the central clear region in the sample spectacles 5, peripheral vision may not be ensured easily.

In addition, in the sample spectacles 2 and 3, the top-bottom width of the peripheral clear region was in the range of 2.5 mm to 5.0 mm. This makes it easier to obtain the myopia progression inhibition effect while sufficiently securing peripheral vision in the top-bottom direction. Therefore, it is considered that the design of the lens 2 is more preferable for the frame A, and the design of the lens 1 is more preferable for the frame B.

As is apparent from the foregoing, in spectacles having a spectacle lens for achieving the myopia progression inhibition effect, by designing in view of not only the respective regions (central clear region, functional region, peripheral clear region) but also the frame size, the formation of a habit of looking upward or downward can be inhibited while ensuring peripheral view, and the myopia progression inhibition effect or the like can be achieved easily.

### Reference Signs List

- 10, 100: Spectacle lens
- 11, 110: Central clear region
- 12, 120: Functional region
- 13, 130: Peripheral clear region
- 14: Base region
- 15: Convex region

## Claims

1. Spectacles having a spectacle lens achieving a myopia progression inhibition effect or a hyperopia reducing effect,
the spectacle lens comprising:
a central clear region that realizes a prescription power of a wearer and includes an eye point of the spectacle lens;
an annular functional region that includes a portion with a power different from the prescription power and surrounds the central clear region; and
an annular peripheral clear region that realizes the prescription power and surrounds the functional region, and
a width of the peripheral clear region in a top-bottom direction on a straight line in the top-bottom direction passing through the eye point is smaller than an equivalent circle diameter of the central clear region.

2. The spectacles according to claim 1, wherein a width of the peripheral clear region in a horizontal direction on a straight line in the horizontal direction passing through the eye point is larger than the equivalent circle diameter of the central clear region.

3. The spectacles according to claim 1, wherein the width of the peripheral clear region in the top-bottom direction is equal to or greater than 2.5 mm and equal to or less than 5.0 mm.

4. The spectacles according to claim 1, wherein the central clear region is of a size that fits within a circle having a diameter equal to or greater than 4 mm and equal to or less than 13 mm with the eye point as a center thereof.

5. The spectacles according to claim 1, wherein an area of the central clear region is equal to or greater than 4% and equal to or less than 16% with respect to a sum of areas of the central clear region and the function region.

6. The spectacles according to any one of claims 1 to 5, further comprising a frame having a top-bottom width equal to or greater than 27 mm and equal to or less than 38 mm and a horizontal width equal to or greater than 42 mm and equal to or less than 50 mm.

7. A spectacle lens achieving a myopia progression inhibition effect or a hyperopia reducing effect, the spectacle lens comprising:
a central clear region that realizes a prescription power of a wearer and includes an eye point of the spectacle lens;
an annular functional region that includes a portion with a power different from the prescription power and surrounds the central clear region; and
an annular peripheral clear region that realizes the prescription power and surrounds the functional region, and
when being cut to fit a frame having a top-bottom width equal to or greater than 27 mm and equal to or less than 38 mm, a width of the peripheral clear region in a top-bottom direction on a straight line in the top-bottom direction passing through the eye point is smaller than an equivalent circle diameter of the central clear region.
